Europäisches Patentamt

(19) European Patent Office

Office européen des brevets

(11) Publication number : 0 510 882 A1

# (12) EUROPEAN PATENT APPLICATION

(21) Application number : 92303471.4

(22) Date of filing : 16.04.92

(51) Int. Cl.⁵ : A01D 34/70

(30) Priority : 26.04.91 GB 9109099

(43) Date of publication of application :
28.10.92 Bulletin 92/44

(84) Designated Contracting States :
DE FR GB IT SE

(71) Applicant : Black & Decker Inc.
Drummond Plaza Office Park 1423 Kirkwood
Highway
Newark Delaware 19711 (US)

(72) Inventor : Webster, Craig Duncan
Flat 3, 13 Eslington Terrace
Jesmond, Newcastle upon Tyne (US)

(74) Representative : Stagg, Diana Christine et al
Emhart Patents Department Lyn House 39 The
Parade
Oadby Leicester LE2 5BB (GB)

(54) Lawn mower.

(57) A lawn mower of the type which in operation is supported by a cushion of air and comprises a motor-driven blade 20 rotatable about a substantially vertical axis and a fan 18 rotatable about the same axis, the blade 20 and fan 18 being surrounded by a hood 6 having one or more inlets 22, 24 for air to form the cushion of air, and the hood 6 having its lower edge defined by a lip 8, which in operation retains the cushion of air and under which lip exhaust air leaks and grass collecting means 26 for collecting grass cuttings. The grass collecting means 26 extends from the lip 8 and has an opening 28 therein such that at least a portion of the exhaust air passing under the lip 8 in the region of the grass collecting means 26 passes through the opening 28, together with grass cuttings entrained in said air, said grass cuttings are collected in said grass collecting means 26 and said exhaust air is discharged to the atmosphere.

Fig.1

EP 0 510 882 A1

This invention relates to a lawn mower, and is particularly concerned with a lawn mower of the type which in operation is supported on a cushion of air and which comprises a motor-driven blade rotatable about a substantially vertical axis and a fan rotatable about the same axis, the blade and fan being surrounded by a hood having one or more inlets for air. The mower may additionally comprise a roller, which has the effect of producing a stripe finish on the mown lawn. Such lawn mowers are known as "hover" mowers, and include the double fan type described and claimed in our co-pending UK Patent Application No. 9022636.6.

The first hover mowers left the cut grass, normally in a finely divided state, on the ground. Users could then either leave the cut grass on the ground or they could pick the cut grass up in a secondary operation. In due course attempts were made to design mowers of the hover type which picked the grass up as they went along. Examples of such mowers of the hover type are described in Patent Specifications GB-A-2017475 and EP-B-0037871. In the construction described in the former, cut grass is blown by the air forming the air cushion through an outlet in the hood surrounding the cutting blade and into a grass collecting container attached to the rear of the mower. The efficient operation of this mower requires a specially shaped hood. In the construction disclosed in EP-B-0037871, the cut grass is effectively sucked up by the air stream which then forms the air cushion on which the mower hovers. Thus, the air stream to the fan wheel forming the hover air cushion, before reaching the fan wheel, is used to pick up cut grass and transport it into a grass collecting chamber in the mower.

A disadvantage of the former type of grass-collecting mower, i.e. that which uses the hover air to blow cut grass into the grass bag, is that the hovering efficiency is very much reduced. A disadvantage of the latter type of mower, i.e. that which uses the air forming the air cushion to suck up cut grass, is that as the grass collecting chamber fills up, it becomes heavier and the filter tends to become blocked. Thus air is prevented from reaching the fan, and the cushion of air cannot be maintained at a level which will enable effective grass cutting.

It is an object of the present invention to provide a lawn mower of the hover type which collects grass cuttings, in which the above disadvantages are reduced or substantially obviated.

According to the present invention there is provided a lawn mower of the type which in operation is supported by a cushion of air and which comprises a motor-driven blade 20 rotatable about a substantially vertical axis and a fan 18 rotatable about the same axis, the blade 20 and fan 18 being surrounded by a hood 6 having one or more inlets 22, 24 for air to form the cushion of air, and the hood 6 having its lower edge defined by a lip 8, which in operation retains the cushion of air and under which lip exhaust air leaks and grass collecting means 26 for collecting grass cuttings, characterised in that the grass collecting means 26 extends from the lip 8 and has an opening 28 therein such that at least a portion of the exhaust air passing under the lip 8 in the region of the grass collecting means 26 passes through the opening 28, together with grass cuttings entrained in said air, said grass cuttings are collected in said grass collecting means 26 and said exhaust air is discharged to the atmosphere.

In a preferred embodiment of the lawn mower according to the invention, the hood is modified to increase the air flow towards the rear of the mower where the grass collecting means is located. The lip of the hood at the rear of the mower is raised slightly relative to the lip of the hood at the front of the mower to the extent that exhaust air flow is increased preferentially in this region, but the cushion of air for hovering is maintained.

It is found that the airstream tends to follow the shape of the lip, so that an extended lip in the region of the grass collecting means tends to lift the airstream and entrained grass, and thus improve the grass collection. The preferred profile depends on a number of factors, including the shape of the hood and characteristics of the fan, and can be determined empirically for a particular hood and fan configuration.

In a further preferred embodiment, the rear portion of the grass collecting means may be provided with biasing means, such as spring loading, to provide decreased ground clearance at the outer lip of the grass collecting means. The provision of such means reduces the leakage of air from the rear of the mower, and hence improves the efficiency of grass collection.

The grass collecting means is preferably provided with a flexible skirt to reduce further the leakage of air.

The grass collection means may conveniently be in the form of a separate unit which can be removably attached to the hood of the mower, for example by means of an engaging hook and rib system. The grass collecting box may be in the form of an open box, with or without a mesh or other permeable cover, or may be in the form of a rigid closed box, the top of which is in the form of a filter. The grass collection means may also be, in known manner, in the form of a supported or unsupported fabric bag, closed for example by means of a zipper or other known closure means.

The opening into the grass collecting means and the duct leading to the grass collecting means are shaped to direct the air with the entrained grass cuttings in the optimum direction towards the grass collecting means.

Under particular weather and grass cutting conditions, especially wet weather or with long grass, it is often found that the grass cuttings tend to be dropped by the mower in one particular area, with the result that, as the operator walks along using the mower, the grass tends to lie in lines, generally to one side of the mower's path.

The precise location of the area in which the cuttings are preferentially dropped by a particular design of mower depends on the shape of the hood, and the direction of rotation of the cutting blade and fan.

Such mowers typically have a substantially rectangular shaped hood and, where this is the case, the grass cuttings tend to be preferentially deposited in the region of the rear right hand corner if the blade is rotating clockwise, and in the region of the rear left hand corner if the blade is rotating anticlockwise.

In order to ensure that the maximum possible amount of the grass cuttings are picked up, the grass collecting means is arranged on the side of the rear of the mower at which most of the grass cuttings are dropped, depending on the particular design of mower.

A preferred embodiment of the invention will now be described with reference to the accompanying drawings, in which

Figure 1 is a longitudinal vertical section through a preferred embodiment of the mower;

Figure 2 is a longitudinal vertical section through an alternative embodiment of the mower;

Figure 3 is an underneath view of a mower showing a first arrangement of the grass collecting means; and

Figure 4 is an underneath view of a mower showing an alternative arrangement of the grass collecting means.

A lawn mower of the hover type comprises a body 2, suitably injection moulded from a thermoplastics material, the body comprising a housing 4 mounted on an outwardly directed hood 6 terminating in an outwardly projecting lip 8. An electric motor 10 is seated on an annular flange 12 of a stepped collar 14 attached to the inside wall of housing 4.

Extending from the lower end of motor 10 is an output shaft 16 on which is mounted a fan 18 and a cutting blade 20.

Housing 2 is provided with air inlets 22 and 24. Mounted on the lawn mower is grass collecting means shown generally at 26, comprising an opening 28 communicating with duct 30, a grass collecting box 32 and a filter comprising an apertured plate 34.

The lip 8 is raised at 36 to improve the air flow into the grass collecting box 32, and the outer lip 38 of the grass collecting box is spring loaded to improve the ground contact of the rear of the grass collecting box.

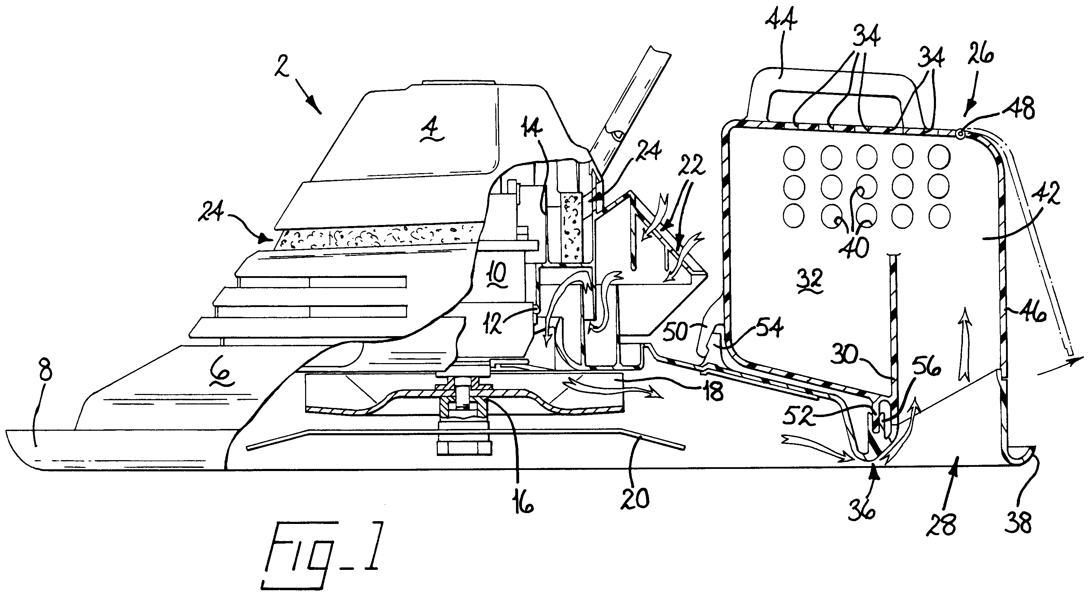

As shown in Figure 1, the grass collecting means 26 comprises a grass collecting box 32 made from a moulded plastics material and provided with perforations 40 towards the top of the wall 42. A handle 44 is provided on the top of the box 32 for manipulating the box, and the rear wall 46 of box 32 is hinged at 48 so that the box can be emptied. The box 32 is attached to the hood 6 by means of hooks 50, 52 formed on the box 32 engaging with ribs 54, 56 formed on the hood 6.

In operation, the fan 18 produces an air stream which provides both the air cushion on which the mower hovers and the air flow which is induced to enter the opening 28 carrying entrained grass cuttings.

More specifically, the fan 18 draws air into the housing 4 through air inlets 22, the air then passing into the hood 6 to form the air cushion. Air is also passed into the upper part of housing 4 through air inlets 24, this air passing into the annular air passage between the motor 10 and the collar 14 and through the motor to cool the motor. This motor-cooling air can then join the air entering through the inlets 22 to form the hover cushion.

The air exiting from the rear of the mower at the lip 36 blows the grass cuttings lying on the ground through the opening 28 up through the funnel 30, whereby they fall into the collecting box 32. Exhaust air is filtered through the filter 34, and discharged to the atmosphere.

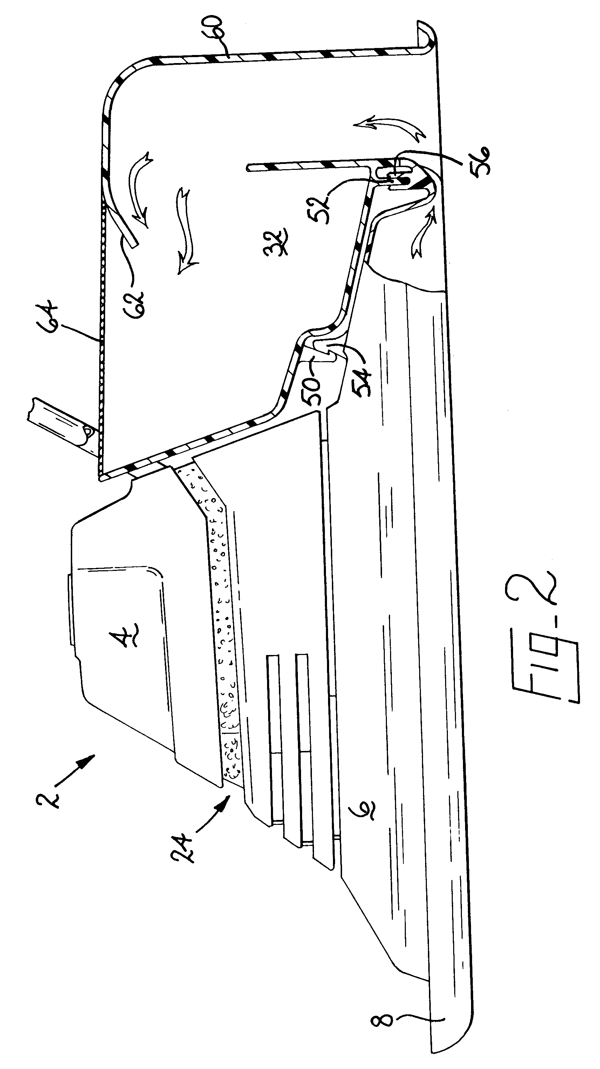

An alternative design of grass collecting means is shown in Figure 2 of the accompanying drawings. The grass collecting box here comprises an open container 32 the rear wall 60 of which is profiled at 62 to direct the grass cuttings into the collecting box 32. A perforated mesh grille cover 64 may be provided. The box 32 is mounted on the hood 6 in the same way as the embodiment of Figure 1. In the embodiment of Figure 2, there are, as shown, preferably no air inlets to the mower in the area above the grass collecting box, in order to reduce turbulence in this area.

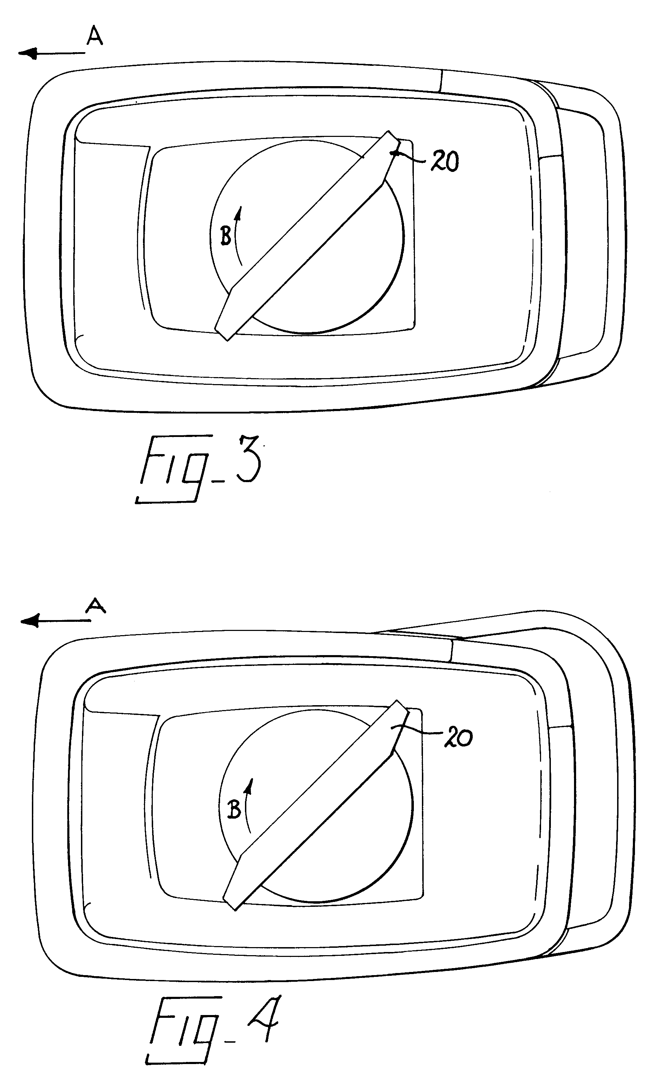

An underneath view of an embodiment of a lawn mower with a grass collection means arranged directly behind the mower is shown in Figure 3 of the accompanying drawings. A similar view of an alternative arrangement of the grass collection means is shown in Figure 4 of the accompanying drawings. In this arrangement, the opening for grass collection is arranged on the side of the rear of the mower at which most of the grass cuttings are dropped. In Figures 3 and 4, arrows A indicate the normal direction of travel of the mower, and arrows B indicate the direction of rotation of the blade 20.

The mower illustrated will of course be provided with a handle and electrical connections, but for the sake of convenience these are not shown.

**Claims**

1. A lawn mower of the type which in operation is supported by a cushion of air and which comprises a motor-driven blade 20 rotatable about a substantially vertical axis and a fan 18 rotatable about the same axis, the blade 20 and fan 18 being surrounded by a hood 6 having one or more inlets 22, 24 for air to form the cushion of air, and the hood 6 having its lower edge defined by a lip 8, which in operation retains the cushion of air and under which lip exhaust air leaks and grass collecting means 26 for collecting grass cuttings, characterised in that the grass collecting means 26 extends from the lip 8 and has an opening 28 therein such that at least a portion of the exhaust air passing under the lip 8 in the region of the grass collecting means 26 passes through the opening 28, together with grass cuttings entrained in said air, said grass cuttings are collected in said grass collecting means 26 and said exhaust air is discharged to the atmosphere.

2. A lawn mower according to claim 1, characterised in that the lip 8 of the hood 6 in the region 36 of the mower from where the grass collecting means 26 extends is raised relative to the rest of the lip 8.

3. A lawn mower according to claim 1 or claim 2, characterised in that the grass collecting means 26 is movably biassed to provide decreased ground clearance at the outer lip 38 of the grass collecting means 26.

4. A lawn mower according to any of claims 1 to 3, characterised in that the grass collecting means is provided with a flexible skirt.

5. A lawn mower according to any of claims 1 to 4, characterised in that the grass collecting box 32 is a rigid moulded box with a cover which is a filter comprising an apertured plate 34.

6. A lawn mower according to any of claims 1 to 4, characterised in that the grass collecting box 32 is an open-topped plastic box which is optionally fitted with a mesh cover grille 64.

7. A lawn mower substantially as herein described.

8. A lawn mower substantially as herein described with reference to the accompanying drawings.

Fig_1

EP 0 510 882 A1

Fig_2

EP 0 510 882 A1

A

20

B

Fig_3

A

20

B

Fig_4

EP 0 510 882 A1

**European Patent Office**

**EUROPEAN SEARCH REPORT**

Application Number

EP    92 30 3471

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A,D | GB-A-2 017 475 (FLYMO SOCIETE ANONYME)<br>* page 1, line 88 - line 115; figure 2 *<br>--- | 1 | A01D34/70 |
| A | GB-A-0 997 528 (AKTIEBOLAGET FLYMO)<br>* the whole document *<br>--- | 1 | |
| A,D | EP-A-0 037 871 (FLYMO LIMITED)<br>* page 2, line 1 - line 33; figure 2 *<br>--- | 1 | |
| A | EP-A-0 045 177 (BIRMID QUALCAST LIMITED)<br><br>----- | | |
| | | | **TECHNICAL FIELDS SEARCHED (Int. Cl.5 )**<br><br>A01D |

The present search report has been drawn up for all claims

| Place of search | Date of completion of the search | Examiner |
|---|---|---|
| BERLIN | 01 JULY 1992 | MERCKX A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

8